(19) Europäisches Patentamt
European Patent Office
Office européen des brevets

(11) **EP 0 656 609 B1**

(12) **EUROPEAN PATENT SPECIFICATION**

(45) Date of publication and mention
of the grant of the patent:
**22.09.1999 Bulletin 1999/38**

(51) Int Cl.$^6$: **G06T 15/10**

(21) Application number: **94203442.2**

(22) Date of filing: **28.11.1994**

(54) **Image processing**

Bildverarbeitung

Traitement d'image

(84) Designated Contracting States:
**DE FR GB**

(30) Priority: **01.12.1993 GB 9324638**

(43) Date of publication of application:
**07.06.1995 Bulletin 1995/23**

(73) Proprietors:
• **PHILIPS ELECTRONICS UK LIMITED
Croydon CR9 3QR (GB)**
Designated Contracting States:
**GB**
• **Koninklijke Philips Electronics N.V.
5621 BA Eindhoven (NL)**
Designated Contracting States:
**DE FR**

(72) Inventor: **Morris, Jeremy Stuart
Reigate, Surrey RH2 7HA (GB)**

(74) Representative: **White, Andrew Gordon et al
Philips Electronics UK Limited,
Patents and Trade Marks Department,
Cross Oak Lane
Redhill, Surrey RH1 5HA (GB)**

(56) References cited:
**EP-A- 0 447 222**

• **IEEE COMPUTER GRAPHICS AND
APPLICATIONS., vol.12, no.4, July 1992, NEW
YORK US pages 89 - 94, XP281908 BLINN
'HYPERBOLIC INTERPOLATION'**
• **IEEE COMPUTER GRAPHICS AND
APPLICATIONS., vol.6, no.9, September 1986,
NEW YORK US pages 40 - 53, XP4804 BIER
'TWO-PART TEXTURE MAPPING'**
• **COMPUTERS AND GRAPHICS., vol.8, no.2, 1984,
OXFORD GB pages 115 - 123 GANGNET E.A.
'PERSPECTIVE MAPPING OF PLANAR
TEXTURES'**
• **IEEE COMPUTER GRAPHICS AND
APPLICATIONS., vol.6, no.11, November 1986,
NEW YORK US pages 56 - 67, XP2233
HECKBERT 'SURVEY OF TEXTURE MAPPING'**

**Description**

The present invention relates to a method of image processing and an image processing apparatus.

In particular, the present invention relates to rendering a two dimensional image from three dimensional image data, wherein a polygon defined in three dimensional space is projected into two dimensional space and pixel values from a two dimensional image are mapped onto pixel positions within said projected two dimensional polygon.

Computer graphics systems are known in which two dimensional video images or two dimensional textures appear wrapped around a solid three dimensional object. A three dimensional object is represented as three dimensional image data, in which the vertices of polyhedra are defined as three dimensional co-ordinate locations within a virtual three dimensional world, commonly referred to as world-space. The object is viewed by producing a two dimensional projection from the three dimensional data, so as to produce a still two-dimensional image, or a sequence of images, which may be recorded onto photographic film or a video carrying medium.

The position of objects, along with viewing position and orientation, may be adjusted within the three dimensional world-space, resulting in a sequence of projections being calculated. These projections may be calculated on a frame-by-frame basis, possibly in real time, thereby facilitating the creation of a virtual interactive environment.

In order to effect the rendering of three dimensional objects, each surface of a polyhedron may be considered individually, thereby reducing the object to a net of polygons. Thus, it is possible to project the object on a polygon-by-polygon basis and to calculate lighting values for each polygon, so that displayable pixel values may be determined for the pixel positions which lie within the projected polygon boundaries.

In addition to identifying solid colours for each polygon surface, it is also possible to map an existing video frame onto the polygon surfaces, so that it appears as if a flat two dimensional image has been wrapped around the three dimensional object. The video frame may consist of a single image, thereby creating the effect of a texture being mapped onto the three dimensional object. Alternatively, the video image may consist of a video sequence, thereby creating the effect of a moving video image being wrapped around the solid object.

In the three dimensional world-space, polygons have orientations in the x,y and the z dimensions. However, once projected onto a two dimensional plane, the polygons are defined with only two dimensions which, in order to distinguish these from the x,y and z dimensions of the three dimensional world, will be identified herein as X and Y dimensions. Thus, within a video frame, lines are scanned from the top left corner, in which traversing across a line is achieved by increasing values of X and advancing to the next line is achieved by increasing the values of Y.

In order to create the illusion of a three dimensional object being viewed, it is necessary to take account of perspective, when projecting the three dimensional polygons onto the two dimensional plane. This is a non-linear process and, consequently, computationally demanding. It is therefore preferable to project the vertices of the three dimensional polygons onto positions within the two dimensional plane and thereafter perform further operations, such as shading and rendering, on the two dimensional polygons, such that it is only necessary to perform calculations with respect to two dimensions, rather than three.

It is also conventional to perform manipulations on the two dimensional polygon by processes of linear interpolation. Thus, in preference to allocating a single colour to each polygon surface, thereby resulting in a clear identification of the polygon boundaries, it is possible to perform Gouraud shading on the polygons by identifying a polygon colour for each of the vertices. Thereafter, pixel positions along the edges of the polygon are calculated by linearly interpolating along said edges and pixel values within the polygon are allocated values by linearly interpolating across the horizontal scan-line. Such a prior art approach is known e.g. from EP-A-0 447 222.

Although this process works adequately well when performing solid shading on an object, problems arise when performing texture or video mapping.

As previously stated, the purpose of performing texture mapping or video mapping is to create the illusion of a texture of video image being wrapped around a solid three dimensional object. Thus, the desired result will be achieved if the calculations are performed in the three dimensional world-space. However, as previously stated, this is computationally demanding and would not, therefore, be realised in most practical embodiments. In the approach of the above mentioned EP-A-0 447 222, for instance, complex matrix and vectorial operations are required. This approach is based on the concept of perspective horizon and on vectors parallel (h) and normal (m) to it. However, performing the mapping operation on the two dimensional polygonal surface by a process of linear interpolation from the vertices fails to take account of the non-linear nature of the perspective, resulting in incorrectly calculated values and clear errors in the final output image, in particular where the polygon spans a significant range of depth (z) values.

According to a first aspect of the present invention, there is provided an image processing method for rendering a two dimensional image from three dimensional image data, wherein a polygon defined in three dimensional space is projected into two dimensional space and pixel values from a two dimensional image are mapped onto pixels within said projected two dimensional polygon, characterised by the steps of: providing stored values of the coordinates of the projected two dimensional polygon, together with depth and mapping image coordinate values for each vertex, determining the inverse of the depth value and the product thereof with the respective mapping coordinate values at each of the vertices of the projected two dimensional polygon, and interpolating therefrom to determine pixel values along edges of the projected polygon and along scan lines therebetween.

Thus, the present invention allows mapping values to be calculated perspectively correctly in a manner which can be efficiently interpolated in hardware.

According to a second aspect of the invention, there is provided an image processing apparatus arranged to render a two dimensional image from three dimensional image data, such that a polygon defined in three dimensional space is projected into two dimensional space and pixel values from a two dimensional image are mapped onto pixels within the projected polygon, characterised by: first storage means arranged to store the coordinates of the vertices of the polygon projected into two dimensional space together with depth and mapping image coordinate values for each vertex; calculation means arranged to derive the inverse of the depth value and the respective products thereof with the mapping image coordinate values for the vertices; second storage means arranged to receive and store the derived values from the calculation means; and processing means coupled to said first and second storage means and arranged to interpolate the derived values from the second storage means to determine pixel values along edges of the projected polygon and along scan lines therebetween.

Thus, the present invention provides an advantage of allowing perspectively correct video and texture mapping, but with reduced computational requirements per pixel.

The invention will now be described by way of example only, with reference to the accompanying drawings, in which:

Figure 1 shows an image processing apparatus, including a processor having circuitry for effecting two dimensional texture mapping;
Figure 2 shows a three dimensional object mapped into two dimensional screen space;
Figures 3 and 4 show a polygon representing a portion of the mapped object image of Figure 2; and
Figure 5 schematically illustrates a portion of the process unit 15 of Figure 1.

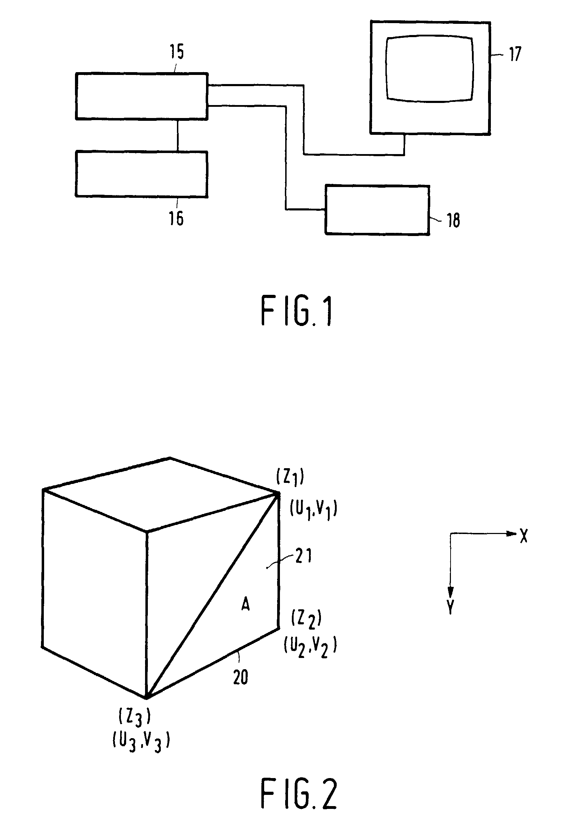

An image processing apparatus is shown in Figure 1, having a processing unit 15, arranged to process three dimensional image data to produce a viewable two dimensional view of a virtual three dimensional world. Three dimensional data and instructions controlling the operation of the processor 15, are stored via a permanent storage device 16, which may include a magnetic disc, an optical disc, a magneto-optical disc or other suitable storage medium. For example, the data could be stored on a conventional audio-tape, compact disc (CD-ROM) or any other medium capable of supplying data to the processor 15 at the required rate.

Video images are supplied to a video monitor 17, which could be in the form of a conventional television receiver. Furthermore, interactive inputs are received from a controller 18, which could take the form of a keyboard, tracker-ball, mouse or dedicated keypad, etc.

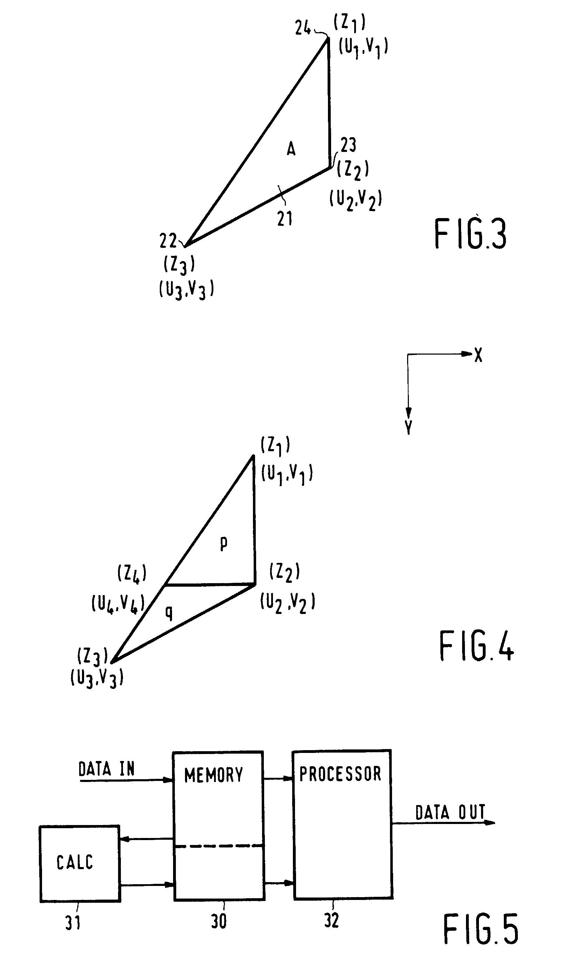

Three dimensional data is stored by defining the position of polyhedra vertices in a three dimensional co-ordinate space. A two dimensional view of the three dimensional data is produced, on a frame-by-frame basis, by considering the vertices as being connected by straight lines, thereby defining a net of flat polygons. A view is rendered by considering each polygon in turn, possibly after performing back face culling, etc., so as to remove polygons which are not visible from the particular view under consideration. Thereafter, a list of polygons may be defined, which ensures that the polygons are rendered in the correct order. Figures 2 and 3 illustrate how a three dimensional object, in this case a cube 20, may be viewed as a net of flat polygons.

It is possible to allocate a solid colour to each of the polygons or, alternatively, to identify colours for the vertices and thereafter allocate colour values for each pixel within the polygon boundary by a process of linear interpolation. A similar process may also be performed to effect texture mapping or video mapping.

In Figure 3, a polygon 21 (i.e. in this case triangle 4 forming part of one face of cube 20) has been projected into a two dimensional viewing plane by processing three dimensional co-ordinates for vertices 22, 23 and 24. Thus, these vertices were previously defined in a three dimensional space, having x, y and z co-ordinates and are projected onto a two dimensional (X, Y) plane.

The conveyance of information obtained from the x dimension to an observer may be achieved by ensuring that the polygons are rendered in the correct order, that is to say, polygons towards the rear (having greatest z extent) are rendered before polygons which have lower values of z, thereby ensuring that the polygons closest to an observer occlude polygons which are further away from the observer. Furthermore, information derived from the z dimension is also retained by ensuring perspectively correct projection of the polygons onto the two dimensional plane.

After projection, vertices 22, 23 and 24 are positioned at perspectively correct locations within the two dimensional display image-frame. Each vertex contains coordinate locations reflecting a mapping from the three dimensional world space to the two dimensional display image plane, in the form of a three dimensional co-ordinate set and a two dimensional co-ordinate set. In addition, each vertex may also contain other information, such as that defining aspects of the surface of the polygon, such as its colour, opacity or specularity, etc.

In the present embodiment, the processor is concerned with mapping a two dimensional image onto a three dimensional object, wherein said object is defined in the three dimensional world-space. The two dimensional image is a conventional video frame, to provide a mapping of a video texture onto the three dimensional object. Alternatively, a sequence of video frames may be considered, resulting in the mapping of a moving video sequence onto the three dimensional object. Thus, the video frame consists of an array of multi-coloured pixels, which may be defined as RGB values, luminance plus colour difference values or a compressed representation of such values. The position of each pixel within the image frame is identified by measuring along a scan-line from the top left corner, in order to give a U co-ordinate and measuring the number of scan lines down the frame, resulting in a V co-ordinate. Thus, it should be emphasised that the notation U and V is used herein to identify co-ordinate locations within the originating image and should not be confused with colour difference signals used in the PAL system.

Returning to the polygon 21, said polygon may be considered as an area of an output image and the purpose of the texture mapping procedure is to identify pixel values for said area. Thus, the image frame may be built up in a storage device and once completely full, that is to say, once pixel values have been calculated for all of the pixels within the frame, said frame may be raster scanned in order to produce a viewable video signal.

Vertices 22, 23 and 24 were originally defined in three dimensional space, each having a coordinate position (x,y,z). The projection into the two dimensional plane results in each vertex having a two dimensional coordinate within the viewing plane (X,Y). Thus, the vertices 22, 23 and 24 define an area of pixels within the output video frame, bounded by triangular polygon 21.

In theory, it would be possible to consider each pixel within triangle 21 in the three dimensional world space. Thus, an input two dimensional image could be mapped into the three dimensional world space, pixel values could be calculated within said space, whereafter said pixels could be projected into the two dimensional viewing plane. However, such a procedure would be computationally expensive and it would not allow the texture mapping facility to be implemented on many practical platforms.

As previously stated, it is known to effect types of shading by considering each of the vertices 22, 23, 24 and interpolating therebetween. We have appreciated that a similar procedure may be adopted for effecting texture mapping, wherein a mapping is defined for each of the vertices, after which mappings for each of the pixels bounded by the polygon are calculated by interpolating between the information which is available.

A mapping is defined for a vertex which identifies a particular pixel location within the input image frame. Thus, in addition to the (X,Y) position being defined for a vertex, a (U,V) co-ordinate is also defined for this vertex. A pixel within the output image frame is defined at position (X,Y) of the vertex, having colour values obtained by mapping a pixel from the input image frame from position (U,V) in the input frame. Similarly, pixel values at other vertices are defined by (U,V) coordinate mapping into the input image frame.

For a triangular polygon 21 to be rendered, it is apparent that a triangular region of pixels within the input image frame will be mapped onto the pixels within polygon 21. Pixel values, defined by (U,V) co-ordinates, are identified for all of the pixel locations (X,Y) within the polygon region by a process of linear interpolation.

As illustrated in Figure 2, mapping and rendering are effected with reference to triangular polygons, therefore a first stage would consist of splitting the flat surfaces of object 20 into triangular renderable polygons and projecting the polygons onto a two dimensional plane. Thereafter, maps are defined for the polygon vertices and additional positions are interpolated, such that individual pixels within the polygons are identified by a direct two dimensional mapping from the input image to the output image.

The process is initiated by calculating the values $1/z$, $U/z$ and $V/z$ at each of the vertices 22, 23, 24. These values are then interpolated along the edges of the triangle and across the horizontal scan lines. At each pixel position, the division $1/(1/z)$ will give the correct z value for that position in the triangle. Multiplication by $U/z$ and $V/z$ with this z value will give the correct U and V values respectively.

We have appreciated the attractiveness of this method for real-time three dimensional image synthesis because of its ease of hardware implementation. Referring to Figures 4 and 5, triangle A may be split into two triangles p and q (either flat topped or flat bottomed) which will require calculation of the correct values of $U_4$, $V_4$ and $z_4$.

Considering triangle q, the vertices have coordinates $(X_2, Y_2)$, $(X_3, Y_3)$ and $(X_4, Y_4)$ with respective depth coordinate values of $Z_2$, $Z_3$ and $Z_4$. The following initial values are calculated and loaded into hardware incrementers (a first area of memory 30):

$$X_{\text{right slope}} = (X_3 - X_2)/(Y_3 - Y_2)$$

$$X_{\text{left slope}} = (X_3 - X_4)/(Y_3 - Y_4)$$

$$z_{\text{left slope}} = [(1/z_3) - (1/z_4)]/(Y_3 - Y_4)$$

$$U_{\text{left slope}} = [(U_3/z_3) - (U_4/z_4)]/(Y_3 - Y_4)$$

$$V_{\text{left slope}} = [(V_3/z_3)-(V_4/z_4)]/(Y_3-Y_4)$$

$$Z_{\text{horizontal slope}} = [(1/z_2)-(1/z_4)]/(X_2-X_4)$$

$$U_{\text{horizontal slope}} = [(U_2/z_2)-(U_4/z_4)]/(X_2-X_4)$$

$$V_{\text{horizontal slope}} = [(V_2/z_2)-(V_4/z_4)]/(X_2-X_4)$$

Scanning across the triangle, pixel by pixel, begins from point $(X_4,Y_4)$ having depth coordinate $z_4$ and with Y constant at $Y_4$, proceeds to point $(X_2,Y_2)$ at depth $z_2$. At each pixel, the texture coordinates U and V are calculated as follows (the subscript f indicates the value at the pixel immediately preceding):

$$z = 1/(1/z) = 1/[(1/z_f) + z_{\text{horizontal slope}}]$$

$$U = z*U/z = z*[(U_f/z_f) + U_{\text{horizontal slope}}]$$

$$V = z*V/z = z*[(V_f/z_f) + V_{\text{horizontal slope}}]$$

For subsequent scan lines $(Y< =Y_3)$, the texture coordinates are calculated in the same way, with the following boundary conditions:

$$X_{\text{start}} = X_{\text{start(previous line)}} + X_{\text{left slope}}$$

$$X_{\text{finish}} = X_{\text{finish (previous line)}} + X_{\text{right slope}}$$

$$z_{\text{start}} = z_{\text{start(previous line)}} + z_{\text{left slope}}$$

$$U_{\text{start}} = U_{\text{start(previous line)}} + U_{\text{left slope}}$$

$$V_{\text{start}} = V_{\text{start (previous line)}} + V_{\text{left slope}}$$

It will be appreciated that, as for the values of z, U and V having the subscript "left slope" in the above list, the values of z, U and V having the subscripes "start" and "start(previous line)" are multiples of 1/z.

As shown schematically in Figure 5, the apparatus arranged to perform these functions may comprise a memory 30 into a first area of which the initial coordinate and slope values are loaded, a calculation unit 31 arranged to derive the initial values of 1/z, U/z and V/z (which values are stored in a second area of memory 30) and a processor 32 deriving the values of z, U and V at each pixel. In a practical embodiment, it is envisaged that the calculation and processing functions would be managed by a single processor device.

To achieve texture mapping without aliasing, it is necessary to perform correct texture filtering. Accordingly, at each pixel position, more information than simply the texture co-ordinate associated with that position may be provided.
Since

$$U_{horizontalslope} = \frac{d(U/z)}{dx}$$

and

$$\frac{d(U/z)}{dX} = \frac{1}{z}.\frac{dU}{dX}+U.\frac{d(1/z)}{dX}$$

then

$$\frac{dU}{dX} = z*[d\frac{(U/z)}{dX} - U.\frac{d(1/z)}{dX}]$$

$$= z*[U_{horizontaslope} - U.(z_{horizontalslope})]$$

The present method therefore enables efficient derivation of the information necessary for texture filtering. The derivation comprises:

$$z = 1/(1/z)$$

$$U = z*(U/z)$$

$$V = z*(V/z)$$

$$\frac{dU}{dX} = z*[U_{horizontalslope} - U.(z_{horizontalslope})]$$

$$\frac{dV}{dX} = z*[V_{horizontalslope} - V.(z_{horizontalslope})]$$

$$\frac{dU}{dY} = z*[U_{verticalslope} - U.(z_{verticalslope})]$$

$$\frac{dV}{dY} = z*[V_{verticalslope} - V.(z_{verticalslope})]$$

[The vertical slope variables are calculated per triangle using the same techniques as previously described for the calculation of the horizontal slope variables].

From the foregoing, it may be seen that the cost in calculation to derive the necessary texture information is 1 division, 10 multiplications and 4 additions. To achieve real time texture mapping, a number of known techniques may be used to reduce the texture computation required in the processor 32 per pixel. In all cases, the gradient values (dU/dX,dU/dY,dV/dX, dV/dY) derived by the foregoing method may be used to perform correct filtering.

As examples, the gradient values may be used to select the most appropriate resolution level if using a mip-map filtering method as described in "Pyramidal Parametrics" by L. Williamson, Computer Graphics (Proc. SIGGRAPH 83) Vol. 17 No. 3 July 1983. Alternatively they may be used to index a summed-area table in a method as described in "Summed-Area Tables for Texture Mapping" by F. C. Crow, Computer Graphics (Proc. SIGGRAPH 84) Vol. 18, No. 3 July 1984 or to derive an elliptically-shaped filter kernel per pixel as described in "Creating Raster Omnimax Images from Multiple Perspective Views using the Elliptical Weighted Average Filter" by N. Greene and P. Heckbert, IEEE CG&A, Vol. 6, June 1986. The disclosures of these documents, and the extension of the present method into the techniques therein described, are incorporated herein by reference.

From reading the present disclosure, other modifications will be apparent to persons skilled in the art. Such modifications may involve other features which are already known in the design, manufacture and use of image processing apparatus and devices and component parts thereof and which may be used instead of or in addition to features already described herein.

## Claims

1. An image processing method for rendering a two dimensional image from three dimensional image data, wherein a polygon defined in three dimensional space is projected into two dimensional space and pixel values from a two dimensional image are mapped onto pixels within said projected two dimension polygon, characterised by the steps of:

   providing stored values of the coordinates (X, Y) of the projected two dimensional polygon, together with depth (z) and mapping image coordinate values (U, V) for each vertex;
   determining the inverse (1/z) of the depth value and the product (U/z, V/z) thereof with respective mapping image coordinate values (U, V) at each of the vertices of the projected two dimensional polygon; and
   interpolating therefrom to determine pixel values along edges of the projected polygon and along scan lines therebetween.

2. A method according to Claim 1, in which the projected two dimensional image is divided into a plurality of triangles, and the steps of value determination and interpolation are carried out for each of the triangles in turn.

3. A method according to Claim 2, in which the triangles are processed in the order of the greatest to the least depth coordinate value.

4. A method according to Claim, in which the image is divided such that each of the plurality of triangles has an edge extending parallel to an axis of the two dimensional space.

5. A method according to Claim 1, comprising the further step of deriving texture gradient values as the rate of change of one or more texture coordinates in either or both axis directions of the two dimensional space within the image.

6. A method according to Claim 5, comprising the step of selecting one from a plurality of available resolution levels in dependence on one or more derived texture gradient values.

7. A method according to Claim 1, wherein the step of interpolation comprises linear interpolation.

8. Image processing apparatus arranged to render a two dimensional image from three dimensional image data, such that a polygon defined in three dimensional space is projected into two dimensional space and pixel values from a two dimensional image are mapped onto pixels within the projected polygon characterised by:

   first storage means arranged to store the coordinates of the vertices (X, Y) of the polygon projected into two dimensional space, together with depth (z) and mapping image coordinate values (U, V) for each vertex;
   calculation means arranged to derive the inverse (1/z) of the depth value and the respective products (U/z, V/z) thereof with the mapping image coordinate values for the vertices;
   second storage means arranged to receive and store the derived values from the calculation means; and
   processing means coupled to said first and second storage means and arranged to interpolate the derived values from the second storage means to determine pixel values along edges of the projected polygon and along scan lines therebetween.

9. Apparatus according to Claim 8, operable to successively map a plurality of polygonal images, including means for determining which of a plurality of such images has the greatest depth coordinate value and mapping that image first.

10. Apparatus according to Claim 8, wherein said processing means is operable to determine, for each pixel and from the depth coordinate value and information stored in said first and second memory means, a texture gradient value as the rate of change of a texture coordinate in an axis direction of the two dimensional space within the image.

## Patentansprüche

1. Bildverarbeitungsverfahren für die Bildaufbereitung eines zweidimensionalen Bildes ausgehend von dreidimensionalen Bilddaten, wobei ein im dreidimensionalen Raum definiertes Polygon in den zweidimensionalen Raum projiziert wird und Bildelementwerte von einem zweidimensionalen Bild auf Bildelemente innerhalb des genannten projizierten zweidimensionalen Polygons abgebildet werden, gekennzeichnet durch die folgenden Schritte:

Liefern von gespeicherten Werten der Koordinaten (X, Y) des projizierten zweidimensionalen Polygons, zusammen mit Tiefe- (z) und Abbildungs-Bildkoordinatenwerten (U, V) für jeden Scheitelpunkt;
Bestimmen des Kehrwertes (1/z) des Tiefe-Wertes und Bestimmen des Produktes dieses Kehrwertes (U/z, V/z) mit den entsprechenden Abbildungs-Koordinatenwerten (U, V) bei jedem der Scheitelpunkte des projizierten zweidimensionalen Polygons; und
hiervon ausgehend Interpolieren, um Bildelementwerte entlang der Kanten des projizierten Polygons und entlang den Abtastzeilen dazwischen zu bestimmen.

2. Verfahren nach Anspruch 1, wobei das projizierte zweidimensionale Bild in eine Vielzahl von Dreiekken unterteilt wird und die Schritte zur Wertbestimmung und Interpolation nacheinander für jedes der Dreiecke durchgeführt werden.

3. Verfahren nach Anspruch 2, wobei die Dreiecke in der Reihenfolge vom größten Tiefe-Koordinatenwert zum kleinsten Tiefe-Koordinatenwert verarbeitet werden.

4. Verfahren nach Anspruch 2, wobei das Bild so unterteilt wird, daß jedes der vielen Dreiecke eine Kante besitzt, die parallel zu einer Achse des zweidimensionalen Raums verläuft.

5. Verfahren nach Anspruch 1, mit dem weiteren Schritt der Ableitung von Texturgradientenwerten als Änderungsrate von einer oder mehreren Texturkoordinaten in einer oder beiden Achsenrichtungen des zweidimensionalen Raums innerhalb des Bildes.

6. Verfahren nach Anspruch 5, mit dem Schritt der Auswahl von einem Auflösungsniveau aus einer Vielzahl von verfügbaren Auflösungsniveaus in Abhängigkeit von einem oder mehreren abgeleiteten Texturgradientenwerten.

7. Verfahren nach Anspruch 1, wobei der Schritt der Interpolation eine Linearinterpolation umfaßt.

8. Bildverarbeitungsvorrichtung, die vorgesehen ist, um ein zweidimensionales Bild ausgehend von dreidimensionalen Bilddaten so wiederzugeben, daß ein im dreidimensionalen Raum definiertes Polygon in den zweidimensionalen Raum projiziert wird und daß Bildelementwerte von einem zweidimensionalen Bild auf Bildelemente innerhalb des projizierten Polygons abgebildet werden, gekennzeichnet durch:

erste Speichermittel, die vorgesehen sind, um die Koordinaten der Scheitelpunkte (X, Y) des in den zweidimensionalen Raum projizierten Polygons zusammen mit den Tiefe- (z) und Abbildungs-Bildkoordinatenwerten (U, V) für jeden Scheitelpunkt zu speichern;
Berechnungsmittel, die vorgesehen sind, um den Kehrwert (1/z) des Tiefe-Wertes und die betreffenden Produkte (U/z, V/z) des Kehrwertes mit den Abbildungs-Bildkoordinatenwerten für die Scheitelpunkte abzuleiten;
zweite Speichermittel, die vorgesehen sind, um die abgeleiteten Werte von den Berechnungsmittel zu empfangen und zu speichern; und
Verarbeitungsmittel, die mit den genannten ersten und den genannten zweiten Speichermitteln gekoppelt sind und vorgesehen sind, um die abgeleiteten Werte von den zweiten Speichermitteln zu interpolieren, um Bildelementwerte entlang der Kanten des projizierten Polygons und entlang der Abtastzeilen dazwischen zu bestimmen.

9. Vorrichtung nach Anspruch 8, die dazu dient, eine Vielzahl von polygonalen Bildern nacheinander abzubilden, mit Mitteln, um zu bestimmen, welches dieser zahlreichen Bilder den größten Tiefe-Koordinatenwert hat, um dieses Bild als erstes abzubilden.

10. Vorrichtung nach Anspruch 8, wobei das genannte Verarbeitungsmittel dazu dient, für jedes Bildelement und ausgehend von dem Tiefe-Koordinatenwert sowie von den in den ersten Speichermitteln und in den zweiten Speichermitteln gespeicherten Informationen einen Texturgradientenwert als Änderungsrate einer Texturkoordinate in einer Achsenrichtung des zweidimensionalen Raums innerhalb des Bildes zu bestimmen.

## Revendications

1. Procédé de traitement d'images pour le rendu d'une image bidimensionnelle à partir de données d'image tridimensionnelle, dans lequel un polygone défini dans un espace tridimensionnel est projeté dans un espace bidimensionnel et des valeurs de pixel d'une image bidimensionnelle sont mappées sur des pixels à l'intérieur dudit polygone bidimensionnel projeté, caractérisé par les étapes consistant à :

   fournir des valeurs stockées des coordonnées (X, Y) du polygone bidimensionnel projeté, conjointement avec des valeurs de profondeur (z) et de coordonnées d'image de mappage (U, V) pour chaque sommet,
   déterminer l'inverse (1/z) de la valeur de profondeur et son produit (U/z, V/z) avec des valeurs de coordonnées d'image de mappage respectives (U, V) à chacun des sommets du polygone bidimensionnel projeté, et
   interpoler à partir de ceux-ci pour déterminer des valeurs de pixel le long des bords du polygone projeté et le long de lignes de balayage intercalées.

2. Procédé suivant la revendication 1, dans lequel l'image bidimensionnelle projetée est divisée en une pluralité de triangles, et les étapes de détermination et d'interpolation de valeurs sont réalisées tour à tour pour chaque triangle.

3. Procédé suivant la revendication 2, dans lequel les triangles sont traités dans l'ordre allant de la plus grande valeur à la valeur de coordonnées la moins profonde.

4. Procédé suivant la revendication 2, dans lequel l'image est divisée de manière que chaque triangle parmi la pluralité de triangles comporte un bord s'étendant parallèlement à un axe de l'espace bidimensionnel.

5. Procédé suivant la revendication 1, comprenant l'étape supplémentaire consistant à dériver des valeurs de gradient de texture comme la vitesse de modification d'une ou de plusieurs coordonnées de texture dans l'une ou les deux directions d'axe de l'espace bidimensionnel à l'intérieur de l'image.

6. Procédé suivant la revendication 5, comprenant l'étape consistant à sélectionner un niveau parmi une pluralité de niveaux de définition disponibles en fonction d'une ou de plusieurs valeurs de gradient de texture dérivées.

7. Procédé suivant la revendication 1, dans lequel l'étape d'interpolation comprend une interpolation linéaire.

8. Appareil de traitement d'images prévu pour rendre une image bidimensionnelle à partir de données d'image tridimensionnelle, de sorte qu'un polygone défini dans un espace tridimensionnel est projeté dans un espace bidimensionnel et que des valeurs de pixel d'une image bidimensionnelle sont mappées sur des pixels à l'intérieur du polygone projeté, caractérisé par :

   un premier moyen de stockage prévu pour stocker les coordonnées des sommets (X, Y) du polygone projeté dans un espace bidimensionnel conjointement avec des valeurs de profondeur (z) et de coordonnées d'image de mappage (U, V) pour chaque sommet;
   un moyen de calcul prévu pour dériver l'inverse (1/z) de la valeur de profondeur et ses produits respectifs (U/z), (V/z) avec les valeurs de coordonnées d'image de mappage pour les sommets;
   un deuxième moyen de stockage prévu pour recevoir et stocker les valeurs dérivées du moyen de calcul, et
   un moyen de traitement couplé auxdits premier et deuxième moyens de stockage pour interpoler les valeurs dérivées du deuxième moyen de stockage afin de déterminer des valeurs de pixel le long de bords du polygone projeté et le long de lignes de balayage intercalées.

9. Appareil suivant la revendication 8, pouvant fonctionner pour mapper successivement une pluralité d'images polygonales, comprenant un moyen pour déterminer parmi une pluralité d'images de ce type celle présentant la valeur de coordonnées de profondeur la plus grande et pour mapper cette image en premier lieu.

10. Appareil suivant la revendication 8, dans lequel ledit moyen de traitement peut fonctionner pour déterminer, pour chaque pixel et à partir de la valeur de coordonnées de profondeur et des informations stockées dans lesdits premier et deuxième moyens de mémoire, une valeur de gradient de texture comme la vitesse de modification d'une coordonnée de texture dans une direction d'axe de l'espace bidimensionnel à l'intérieur de l'image.

FIG.1

FIG.2

FIG.3

FIG.4

FIG.5